# EUROPEAN PATENT APPLICATION

(11) **EP 4 040 576 A1**
(43) Date of publication of application: **10.08.2022**
(21) Application number: 22150636.3
(22) Date of filing: 10.01.2022
(51) Int. Cl.: H01M 10/6553, H01M 50/502, F28D 15/04, F28F 13/00, H01M 10/6569, H01M 50/522, H01M 50/526, H02G 5/10, F28D 21/00

(54) **ELECTRICAL POWER SYSTEM BUS BARS**

(30) Priority: 09.02.2021 GB 202101737
(71) Applicant: Rolls-Royce plc, London N1 9FX (GB)
(72) Inventor: Lambourne, Alexis, Derby, DE24 8BJ (GB); Glover, Neil, Derby, DE24 8BJ (GB); Khan, Jameel, Derby, DE24 8BJ (GB)
(74) Representative: Rolls-Royce plc

(57) **Abstract**

A battery or fuel cell module 10 comprising a plurality of battery cells 11 or fuel cells and metal foam bus bars 12 that electrically connect together at least some of the battery cells 11 or fuel cells is described. The battery or fuel cell module 10 may further include a cooling system arranged to provide a flow of cooling fluid through the metal foam bus bars 12 in order to remove heat from the bus bars 12. In some examples, the cooling system comprises one or more forced air devices 14. In other examples, the metal foam bus bars 12 are encased in a fluid-impermeable skin 15 so that the bus bars form fluid-tight pipes with a metal foam interior, and the cooling system is arranged to provide the flow of cooling fluid through the metal foam interior of the fluid-tight pipes.

## Description

### TECHNICAL FIELD

This disclosure relates to electrical power systems that include metal foam bus bars, and more particularly, but not exclusively, to battery modules that include metal foam bus bars. The electrical power systems may be used in aircraft propulsion systems.

### BACKGROUND

Aircraft and their propulsion systems are becoming increasingly electric in their design. Electric aircraft and most hybrid electric aircraft include batteries which provide all or some of the electrical power supplied to the electrical machines that drive or supplement the drive of the aircraft's propulsors (propellers, ducted fans or gas turbine engines, for example). Batteries may also power non-propulsive electrical loads in these aircraft. Aircraft that are exclusively or almost exclusively powered by internal combustion engines or gas turbines may also include batteries. For example, batteries may be used to facilitate electric starting of gas turbine engines, to improve engine operability by transferring mechanical power to or from gas turbine spools via electrical machines, or to power engine or aircraft electrical loads and systems.

The performances of aircraft and their propulsion systems are limited by their weight, and the weight of batteries can be significant. Batteries used in aircraft propulsion systems can be particularly heavy because of the large number of series- and parallel-connected cells required to achieve the necessary charge capacity and power output.

Another challenge is the thermal management of aircraft batteries. Batteries can generate a significant amount of heat due to the internal resistance of the cells and the resistance of interconnecting components. If this heat is not removed then the battery cells can overheat and enter thermal runaway, which creates a risk of fire and explosion. However, the addition of cooling systems to remove the heat adds further weight to the batteries and reduces their power density.

### SUMMARY

The term "battery module" is used herein to refer to an integrated arrangement of battery cells, some or all of which are electrically connected in series and/or parallel. The term "battery pack" is used to refer to an integrated arrangement of one or more battery modules, some or all of which may be, but are not necessarily, electrically connected in series and/or parallel.

The term "fuel cell module" refers to an integrated arrangement of fuel cells, for example hydrogen fuel cells, some or all of which are electrically connected in series and/or parallel.

According to a first aspect, there is provided an electrical power system comprising metal foam bus bars. The electrical power system may be, or may comprise, a battery module comprising a plurality of battery cells, and the metal foam bus bars may electrically connect at least some of the battery cells together. The electrical power system may also be, or may comprise, a fuel cell module, for example a hydrogen fuel cell module, comprising a plurality of electrically connected fuel cells.

The use of metal foam, as opposed to conventional solid metal, may provide for a reduction in total bus bar mass and/or improved cooling efficiency. The porous structure not only increases the available surface area for more efficient radiative dissipation of heat, but allows for heat to be removed directly from the core of the bus bar via a flow (forced or unforced) of fluid (liquid or gas, e.g. air) through the porous body.

The electrical power system may further comprise a cooling system arranged to provide a flow of cooling fluid through the metal foam bus bars. It has been found that the porous structure of metal foam can induce turbulence in a flow of fluid passing through it. Since turbulent flow can be associated with an increase in heat transfer coefficient, driving or otherwise providing a flow of fluid through the internal structure of a metal foam bus bar may result in a surprising increase in heat dissipation.

The metal foam bus bars may be encased in a fluid-impermeable skin so that the bus bars form fluid-tight pipes with a metal foam interior. The cooling system may be arranged to provide the flow of cooling fluid through the metal foam interior of the fluid-tight pipes. By forming fluid-tight pipes, fluid may be flowed through the porous metal structure at a higher pressure and speed. This may further enhance the turbulence of the cooling fluid flow and thus further increase the efficiency of heat removal from the bus bars. Furthermore, where the cooling fluid is a liquid, the metal foam may damp flow ripples, which may reduce frictional losses and/or improve the efficiency of pumping components used to pump the liquid. The metal foam may also act to as flame arrestor in a flammable liquid cooled system.

The cooling system may comprise one or more heat exchangers in fluid communication with the fluid-tight pipes, whereby the metal foam interior of the pipes can draw liquid cooling fluid from the one or more heat exchangers by capillary action; and the one or more heat exchangers can receive vaporized cooling fluid from the pipes and condense the vaporized cooling fluid into a liquid for returning to the pipes. Such an arrangement, utilizing capillary action to direct the flow of fluid to the pipes, may reduce or even eliminate the need to actively pump and circulate the coolant. This may reduce the complexity, component count, weight and energy consumption of the system.

The cooling system may comprise one or more forced air devices, for example fans or nozzles, arranged to direct a flow of air through the metal foam bus bars. Driving air through the interior of the bus bar may enhance the effect of natural convection, increase turbulent flow of the cooing fluid and generally improve heat dissipation.

The one or more forced air devices may be structurally attached to the bus bars. Such an arrangement may reduce the complexity of assembly of the system.

The one or more forced air devices may be electrically powered by current received from the bus bars. In this way, separate power sources and connections may not be required, and the forced air devices may be powered whenever the system is active and carrying current.

At least one of the bus bars may comprise a first metal foam region; and a second metal foam region. The second metal foam region may have a higher density than the first metal foam region. The use of a second metal foam region of higher density may improve the ease with which the metal foam bus bars can be connected to a solid conductor for onward transport of the current. It may also reduce the impact of discontinuities on the flow of current.

The second metal foam region may be bonded to the first metal foam region at a first boundary. The second metal foam region may also be bonded to a solid metal conductor at a second boundary. The second metal foam region may, for example, be welded; soldered or brazed to the first metal foam region and the solid conductor.

The second metal foam region may have a graded density. The graded density may increase from the density of the first metal foam region. It may increase up to a density of a solid conductor. The use of a graded, intermediate, second metal foam region may further improve the electrical continuity of bus bar.

The second metal foam region may comprise a progressively crushed metal foam that gradually increases in density from the density first metal foam region. In this way, the first and second metal foam regions may be formed from a single piece. This may completely eliminate discontinuities and therefore reduce losses. The second region may increase in density up to the density of a solid metal, such that there are effectively three regions formed from a single piece.

At least one of the bus bars may comprise a solid metal core surrounded by metal foam. This may allow increase the current carrying capability of the bus bars with only a relatively modest increase in weight, whilst also allowing straightforward connection of the bus bar to onward electrical paths. The metal foam may be bonded to the solid metal core.

The metal foam bus bars may be elongate bus bars. A current carrying direction of the bus bars may be parallel to a direction in which the bus bars are elongate.

Where the electrical power system is or comprises a battery module or fuel cell module, the plurality of battery cells or fuel cells may be arranged in array comprising a plurality of rows of cells, each row comprising plural cells. Each respective metal foam bus bar may extend in a plane of the array and be elongate in a direction parallel to a respective row of cells. Each respective metal foam bus bar may electrically connect cells of the respective row.

According to a second aspect, there is provided a battery pack comprising one or more battery modules according to the first aspect.

According to a third aspect, there is provided an aircraft propulsion system comprising an electrical power system or battery or fuel cell module according to the first aspect; or a battery pack according to the second aspect.

According to a fourth aspect, there is provided an aircraft comprising an electrical power system or battery or fuel cell module according to the first aspect; a battery pack according to the second aspect; or a propulsion system according to the third aspect.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:

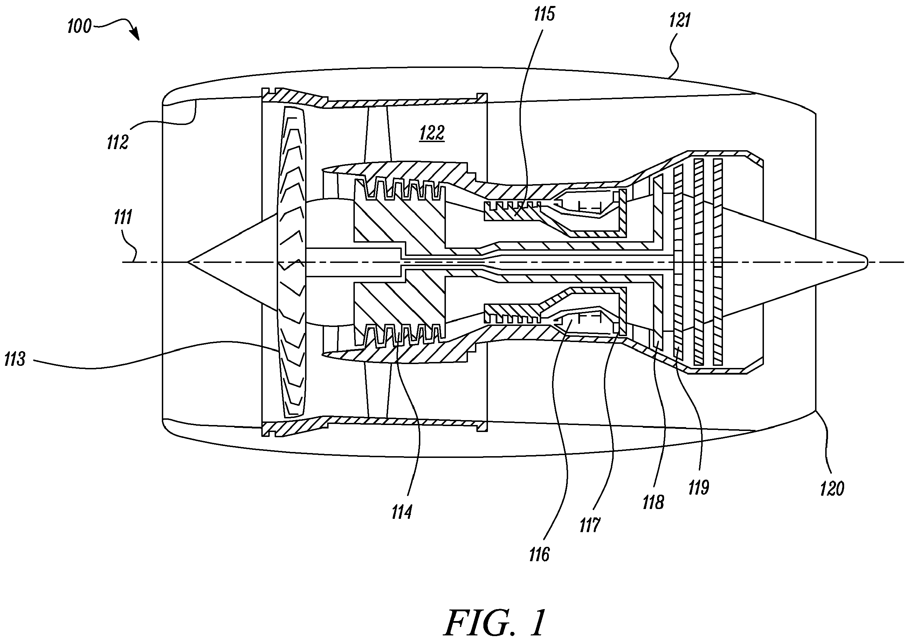

**Figure 1** is a sectional side view of a gas turbine engine;
**Figure 2** is a schematic illustration of a hybrid electric aircraft propulsion system;
**Figure 3** is a schematic illustration of a purely electric aircraft propulsion system;
**Figure 4** illustrates two battery cells of a battery module connected together using conventional solid metal bus bars;
**Figure 5** illustrates two battery cells of a battery module connected using metal foam bus bars;
**Figure 6** illustrates the use of a forced air device to enhance the cooling of the metal foam bus bars of Figure 5;
**Figure 7** illustrates fluid-tight pipes, formed from metal foam bus bars with fluid-impermeable skins, carrying cooling fluid;
**Figure 8** is illustrates a closed loop heat pipe arrangement in which the heat pipes are formed from metal foam bus bars with fluid-impermeable skins;
**Figure 9** illustrates three metal foams that have different pore sizes;
**Figure 10** illustrates the connection of a metal foam bus bar to a solid metal connection via an intermediate region; and
**Figure 11** illustrates metal foam bus bars with solid metal cores.

### Detailed Description

### Figure 1

A gas turbine engine is generally indicated at 100, having a principal and rotational axis 111. The engine 100 comprises, in axial flow series, an air intake 112, a propulsive fan 113, an intermediate pressure compressor 114, a high-pressure compressor 115, combustion equipment 116, a high-pressure turbine 117, an intermediate pressure turbine 118, a low-pressure turbine 119 and an exhaust nozzle 120. A nacelle 121 generally surrounds the engine 100 and defines both the intake 112 and the exhaust nozzle 120.

The gas turbine engine 100 works in the conventional manner so that air entering the intake 112 is accelerated by the fan 113 to produce two air flows: a first air flow into the intermediate pressure compressor 114 and a second air flow which passes through a bypass duct 122 to provide propulsive thrust. The intermediate pressure compressor 114 compresses the air flow directed into it before delivering that air to the high pressure compressor 115 where further compression takes place.

The compressed air exhausted from the high-pressure compressor 115 is directed into the combustion equipment 116 where it is mixed with fuel and the mixture combusted. The resultant hot combustion products then expand through, and thereby drive, the high, intermediate and low-pressure turbines 117, 118, 119 before being exhausted through the nozzle 120 to provide additional propulsive thrust. The high 117, intermediate 118 and low 119 pressure turbines drive respectively the high pressure compressor 115, intermediate pressure compressor 114 and fan 113, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

The gas turbine engine 100 may also incorporate or interface with one or more batteries, for example to power ancillary electrical systems, to facilitate electric starting of the engine and/or to cooperate with one or more electric machines involved in the transfer of mechanical power to and from one or more of the interconnecting shafts.

### Figure 2

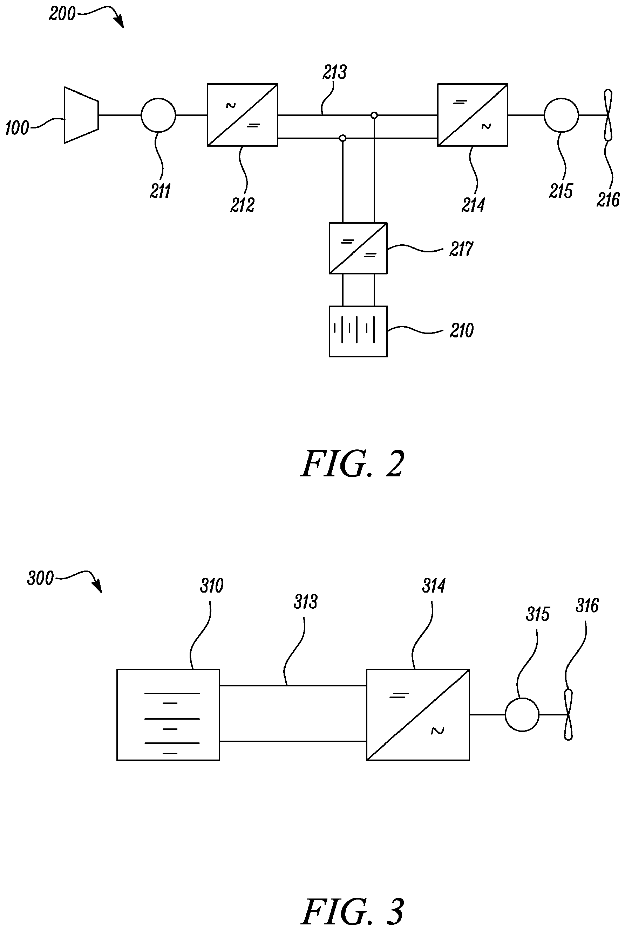

Figure 2 illustrates an exemplary propulsion system 200 of a hybrid electric aircraft. Alternative hybrid electric propulsion system arrangements are known and will occur to those skilled in the art.

The propulsion system 200 includes an engine 100, such as the gas turbine engine 100 described above, and a battery pack 210 (which may alternatively be or additionally include one or more fuel cells). Both the engine 100 and the battery pack 210 are used as energy sources to power a motor-driven propeller 216, as well as ancillary electrical systems (not shown). The propulsion system 200 of the hybrid electric aircraft will typically further comprise a generator 211, an AC/DC converter 212, a high voltage DC (HVDC) distribution bus 213, a DC/AC converter 214, a motor 215 that drives the propeller 216, and a DC/DC converter 217.

A shaft of the engine 100 is coupled to and drives the rotation of a shaft of the generator 211 which thereby produces alternating current. The AC/DC converter 212, which faces the generator 211, converts the alternating current into direct current which is fed to various electrical systems via the HVDC distribution bus 213. These electrical systems include the motor 215 that drives the propeller 216. The motor 215 will typically be a synchronous motor that interfaces with the HVDC distribution bus 213 via the DC/AC converter 214.

The battery pack 210, which may be made up of a number of battery modules connected in series and/or parallel, is connected to the HVDC distribution bus 213 via the DC/DC converter 217. The DC/DC converter 217 converts between a voltage of the battery pack 210 and a voltage of the HVDC distribution bus 213. In this way, the battery pack 210 can replace or supplement the power provided by the engine 100 (by discharging and thereby feeding the HVDC distribution bus 213) or can be charged using the power provided by the engine 100 (by being fed by the HVDC distribution bus 213).

### Figure 3

Figure 3 illustrates an exemplary electric propulsion system 300 of a purely electric aircraft. Alternative electric propulsion system arrangements are known and will occur to those skilled in the art.

The propulsion system 300 includes a battery pack 310 (which may alternatively be or additionally include one or more fuel cells) that feeds a HVDC distribution bus 313, possibly via DC/DC converter (not shown), which delivers power to one or more synchronous motors 315 via a DC/AC converter 314. The one or more motors 315 drive the one or more propellers 316 that propel the aircraft.

### Figure 4

Battery modules and battery packs formed from one or more battery modules will typically include a large number of battery cells connected together in series and/or parallel to meet the terminal voltage and energy storage requirements of the application. The cells, which may be lithium-ion cylindrical cells, prismatic cells, pouch cells or cells of another known type, are typically arranged in an array to provide structure and ease of connection.

An array generally includes rows of cells, each row of the array being one or more cells wide and multiple cells long. The positive terminals of each cell in a row are connected to a common positive bus bar, and the negative terminals of each cell in the row connected to a common negative bus bar. The negative bus bar of the row may then be connected to a positive bus bar of one neighbouring row, whilst the positive bus bar is connected to a negative bus bar of the other neighbouring row. Increasing the number of rows increases both the charge capacity and the terminal voltage of the module, while increasing the number of cells in a row increases charge capacity and the current that can safely be drawn from the cells.

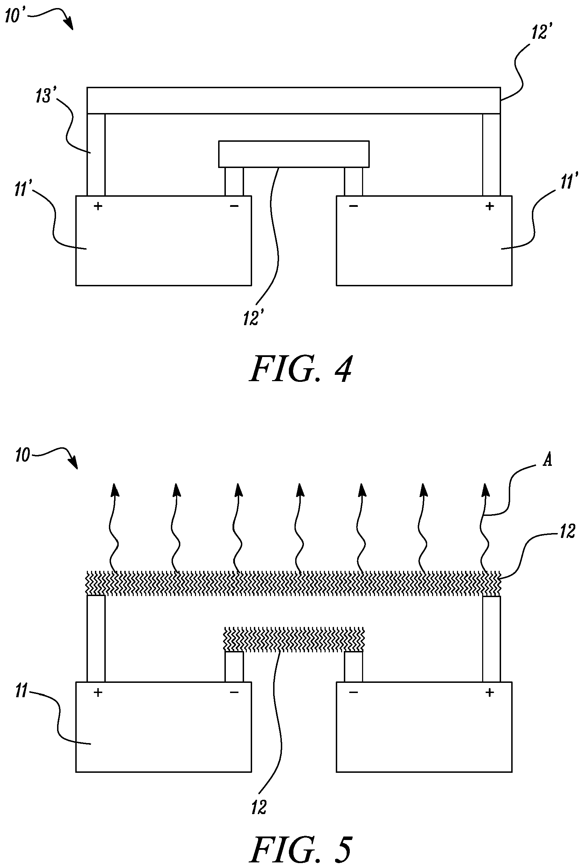

Figure 4 illustrates a portion of a battery module 10'. In the interests of clarity only two battery cells 11' are shown, for example two cells of one row of an array. As can be seen, the terminals 13' of the two cells 11' are connected together by solid metal bus bars 12' of the conventional type. The metal may be copper, aluminium or another conductive metal. The positive terminals are connected by a first, positive, bus bar and the negative terminals are connected together by a second, negative, bus bar. It will be appreciated that in practice the row of cells may include additional cells, and that both the positive and negative bus bars may be elongate, for example extending into the plane of the page of Figure 4, to connect together the terminals of the additional cells.

Aerospace applications will typically make use of battery packs with high terminal voltages (perhaps of the order of 500V to 3kV), which advantageously reduces the current that is drawn from the cells. In principle, the reduction in current can allow for the use of bus bars of reduced size and thus mass. In practice, however, conventional solid metal bus bars are sized to keep the current density and thus the resistive (I²R) losses low. This is in order to minimise heat generation, and to increase the bus bar surface area to improve the efficiency of cooling by radiation of surface heat. As a result, even with the use of high voltages, conventional solid metal bus may be large and heavy.

### Figure 5

In accordance with the present disclosure, Figure 5 illustrates a battery module 10 in which the terminals of the battery cells 11 are instead connected together by metal foam bus bars 12. The metal foam is an open cell foam and, in this embodiment, is copper. Other commercially available metal foams could be used, however, for example aluminium (also favoured because of its good conductivity and relatively low density) or nickel.

The porous structure of the metal foam bus bars means that they have a considerably higher specific surface area (i.e. surface area per unit mass) than solid metal bus bars. A metal foam bus bar consequently radiates heat more efficiently than a solid metal bus bar of equal mass. Furthermore, a fluid, for example air or another dielectric gas within the housing of the battery module, can pass through the porous body of the bus bar. Natural or forced convention, indicated by the arrows 'A' in Figure 5, can therefore carry heat away from the core of the bus bars.

The ability to efficiently reject heat means that a battery module with metal foam bus bars can tolerate a higher current density than solid metal bus bars of equal mass. Bus bars of reduced mass can therefore be used for an equivalent application.

### Figure 6

These advantages may be enhanced by providing an active cooling system that provides a flow of cooling fluid through the porous body of the metal foam bus bars 12.

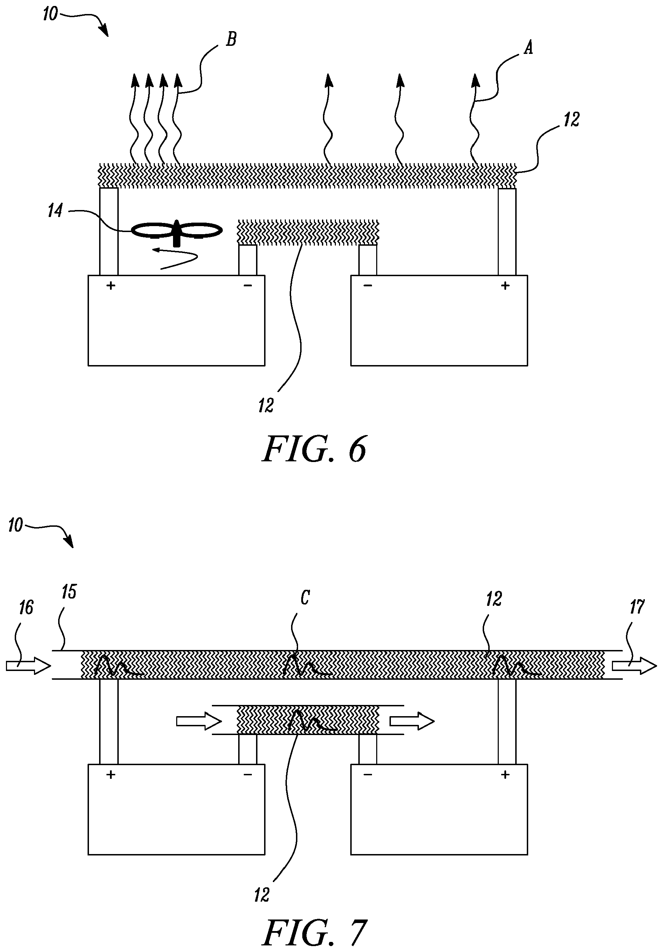

A first embodiment of a battery module 10 with an active cooling system is illustrated in Figure 6, in which a forced air device 14 directs a flow of air through the porous body of the metal foam bus bar 12. Driving a flow of air, or another cooling gas provided in an enclosure of the battery module, through the porous body of the bus bars forces convection and thus increases the heat transfer coefficient. This results in more rapid heat dissipation. This is illustrated in Figure 6 by the higher density of the arrows 'B' in the vicinity of the forced air device 14.

In this example the forced air device 14 is a fan, but other forced air devices such as air nozzles or slots may be used instead. Also, while a single fan 14 is shown in Figure 6, it will be appreciated that any number of forced air devices 14 may be used and that each bus bar may be provided with one or more such devices.

The forced air device(s) 14 may be integrated with the metal foam bus bars 12. For instance, fans 14 may be structurally attached to the bus bars 12 prior to assembly of the battery module 10, and/or may be electrically powered by the bus bars 12.

### Figure 7

A second embodiment of a battery module with an active cooling system is illustrated in Figure 7. In Figure 7, the bus bars 12 are encased in a fluid-impermeable skin 15 of thin metal so as to form fluid-tight pipes with a metal foam core. The cooling system, which may include a pumping arrangement 16 having one or more gear pumps, positive displacement pumps or the like, provides a flow of the cooling fluid through the fluid-tight pipes so that the cooling fluid 16 flows through and carries heat away from the metal foam. The heat may then be rejected through a heat exchanger (not shown) before returning, via a return line 17, to the pumping arrangement 16. In some examples a heat exchanger may be omitted, for example if heat can be adequately rejected through the external surface 15 of the pipes.

It has been found that the porous structure of metal foam induces turbulence (illustrated by the curved lines 'C' in Figure 7) in a flow of fluid through its body. Since turbulent flow may be associated with an increase in heat transfer coefficient, and the degree of turbulence may increase as the speed and pressure of the flow increases, the use of fluid-tight pipes with a metal foam core is associated with a further increase in heat dissipation from the bus bar to the cooling medium.

The cooling fluid used in the embodiment of Figure 7 can be a liquid or a gas. Suitable liquids include silicone oil, a mineral oil, transformer oil or another dielectric liquid. Suitable gases include air, Sulphur Hexafluoride (SF₆) or another dielectric gas. In a liquid cooled system, the metal foam core of the pipes may advantageously damp ripples in the flow of the pumped cooling fluid. The foam may also act as a flame arrestor, in case a flammable liquid coolant is used.

### Figure 8

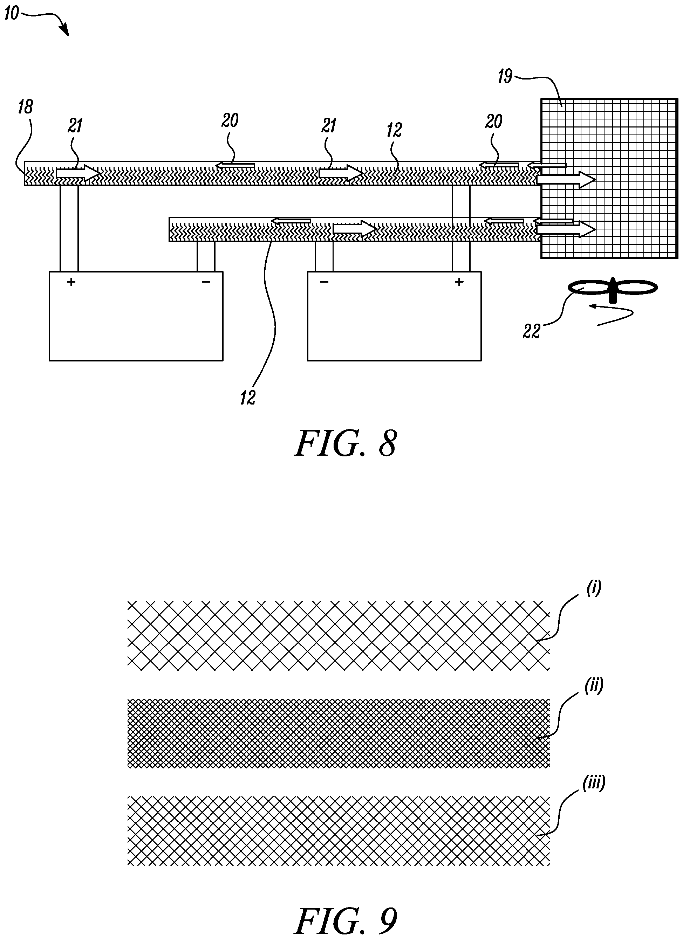

A third embodiment of a battery module 10 with an active cooling system is illustrated in Figure 8.

Like in Figure 7, the metal foam bus bars 12 of Figure 8 are encased in a fluid-impermeable skin 15 so as to form fluid-tight pipes. Unlike the embodiment Figure 7, however, the fluid-tight pipes are sealed at their ends 18 such that the cooling fluid is not circulated in a loop via a return line and pumping arrangement. Instead, the sealed pipes are in fluid communication with a heat exchanger 19. In Figure 8, the two illustrated bus bars 12 share a common heat exchanger 19, but it should be appreciated that the bus bars 12 may share or have their own dedicated heat exchanger.

From the perspective of the pipes, the heat exchanger 19 is a source of liquid coolant, and the liquid coolant is drawn into the pipes by capillary action provided by the metal foam structure. The arrows 20 indicate the flow of liquid coolant through the pipes from the source 19 to towards the ends 18 of the pipes by capillary action. Inside the metal foam of the bus bars, heat is transferred to the liquid coolant which causes the coolant to vaporize. As indicated by the arrows 21, the change of state of the coolant from liquid to vapour causes the coolant to return to heat exchanger 19.

In the heat exchanger, the vaporized coolant is cooled and condensed back into liquid form. Once in liquid form, the coolant is drawn back into the pipes by capillary action and the cycle repeats. In order to manage a greater heat flux or to provide a greater degree of control, the heat exchanger may be liquid cooled (by oil, fuel, a dielectric fluid or another suitable coolant) and/or, as illustrated in Figure 8, may be provided with a forced air device 22 to force convective cooling of the heat exchanger 19.

The coolant used in the embodiment of Figure 8 preferably has a relatively low vaporization temperature so that there is consistent vaporization of the liquid coolant during normal operation of the system. This is to ensure that the liquid coolant is replenished and continues to provide efficient cooling of the metal foam bus bars 12. To some extent, the preferred vaporization temperature will depend on the normal range of operating temperatures of the bus bars, which will vary between applications. Exemplary cooling fluids include water, pentane, ethane, acetone and toluene, though other fluids could be used.

### Figure 9

Figure 9 illustrates three open cell metal foams, (i); (ii); and (iii), of the same material, for example copper. The first metal foam (i) has the largest pores and thus the lowest density. The third metal foam (iii) has the smallest pores and thus the highest density. The second metal foam (ii) has pores of intermediate size and thus has intermediate density.

The particular foam used to implement the metal foam bus bars 12 described herein may be selected according to the application requirements and the capability of the cooling system that is used to cool the bus bars. Generally speaking, if the application necessitates a higher current density then foam of higher density will be required, though a cooling system capable of removing heat at a higher rate can offset the required increase in density.

Further guidance on the manufacture of metal foam materials and the selection of foam parameters can be found in the literature, including, for example, the text "Metal Foams: A Design Guide" by M.F Ashby et al, published by Butterworth-Heinemann.

### Figure 10

The bus bars 12 of a battery module 10 will typically need to be connected to onward electrical paths for the distribution of electrical power to a wider electrical power system, for example in the propulsion system of an aircraft. For this or other reasons it may be necessary to form an electrical connection or termination between a metal foam bus bar 12 and a solid conductor, for example a solid metal bus bar.

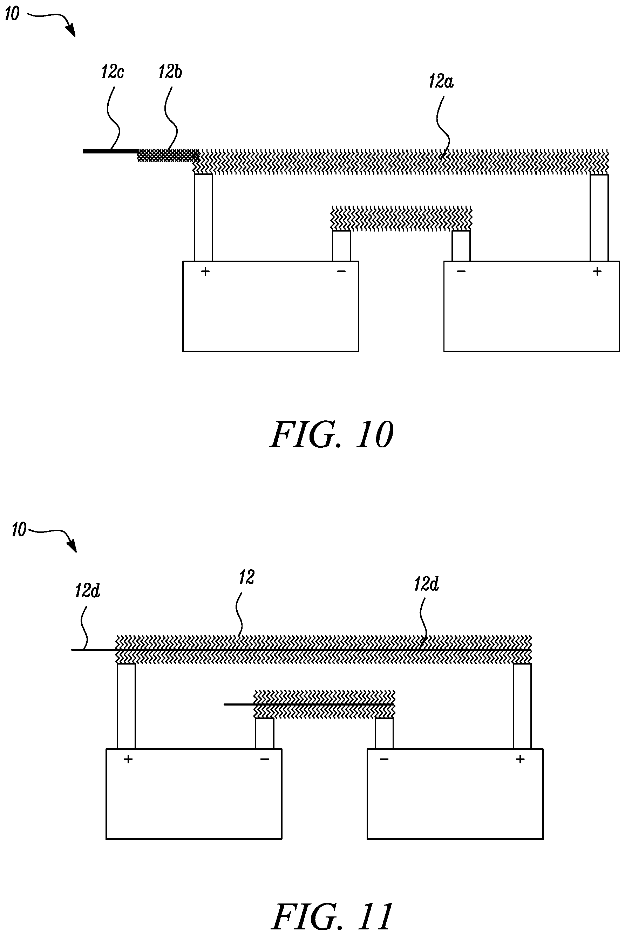

To this end, Figure 10 illustrates an embodiment in which the bus bar 12 may be considered to be formed from three regions: a first metal foam region 12a; a second metal foam region 12b of higher density than the first metal foam region; and a solid conductor region 12c. The use of the second, intermediate region 12b of intermediate density may reduce the impact of sudden discontinuities in the conduction path and increase the ease with which the metal foam can be physically attached to the solid metal region 12c.

In one example of the embodiment of Figure 10, the second metal foam region 12b is bonded to the first metal foam region 12a and to the solid metal region 12c, for example by welding, soldering, brazing or the like. It will be understood that the second metal foam region 12b may actually take the form of multiple metal foam regions of increasing density, each bonded to the preceding and subsequent region. In this way the overall structure can feature a larger number of minor structural discontinuities, rather than a smaller number of more major discontinuities.

In another example of the embodiment of Figure 10, the second metal foam region 12b may be integral with the first metal foam region 12a. That is, the first and second regions 12a, 12b may be formed from the same piece of metal foam. The higher density of the second region 12b may be provided by crushing the foam structure in the second region 12b. In some examples, the extent to which the structure is crushed may be progressively increased such that the second region has a graded density. This grading of the density further reduces the impact of discontinuities in the structure. In some cases, by crushing an end region of the single piece of foam to a high degree, the solid metal region 12c may also be integral with the first and second regions 12a, 12b.

### Figure 11

Another approach that allows the straightforward connection of a metal foam bus bar to a solid onward connection is illustrated in Figure 11. In Figure 11, the metal foam bus bar 12 is formed by bonding a metal foam around a solid metal core 12d. For example, copper foam may be welded, soldered or brazed to a conventional copper metal bus bar.

It will be understood that the embodiments of Figures 10 and 11 can be readily combined with the cooling systems described with reference to Figures 6-8.

It will also be understood that whilst the invention has been described with reference to a battery module, metal foam bus bars could be used elsewhere in an electrical power system. The use of metal foam bus bars 12 may be of particular utility in battery modules because of the challenging thermal environment they present and because bus bars in battery modules inherently gather direct current from the cells. The problems that may arise from the use of alternating current in a foam structure do not arise in a DC battery module. It is also contemplated that metal foam bus bars could be used in a fuel cell, for example a hydrogen fuel cell.

It will also be understood that whilst the invention has been described with reference to electrical power systems in aircraft, the invention could be used in other environments, for example in road vehicles, marine applications, space applications and others.

Embodiments of the invention may be described by the following numbered clauses, with optional features presented in the dependent clauses.
1. A battery or fuel cell module (10) comprising: a plurality of battery cells (11) or fuel cells; and metal foam bus bars (12) that electrically connect together at least some of the battery cells or fuel cells.
2. The battery or fuel cell module (10) of clause 1, further comprising a cooling system arranged to provide a flow of cooling fluid through the metal foam bus bars (12) in order to remove heat from the bus bars.
3. The battery or fuel cell module (10) of clause 2, in which the metal foam bus bars (12) are encased in a fluid-impermeable skin (15) so that the bus bars form fluid-tight pipes with a metal foam interior, and wherein the cooling system is arranged to provide the flow of cooling fluid through the metal foam interior of the fluid-tight pipes.
4. The battery or fuel cell module (10) of clause 3, in which the cooling system comprises one or more heat exchangers (19) in fluid communication with the fluid-tight pipes, whereby the metal foam interior of the pipes can draw liquid cooling fluid from the one or more heat exchangers by capillary action; and the one or more heat exchangers can receive vaporized cooling fluid from the pipes and condense the vaporized cooling fluid into a liquid for returning to the pipes.
5. The battery or fuel cell module (10) of clause 2, in which the cooling system comprises one or more forced air devices (14) arranged to direct a flow of air through the metal foam bus bars (12).
6. The battery or fuel cell module (10) of clause 5, in which the one or more forced air devices (14) are structurally attached to the bus bars (12).
7. The battery or fuel cell module (10) of any one of clauses 2 to 6, in which the metal foam creates a turbulent flow of cooling fluid as the cooling fluid flows through the metal foam.
8. The battery or fuel cell module (10) of any one of the preceding clauses, in which at least one of the bus bars (12) comprises a first metal foam region (12a); and a second metal foam region (12b), wherein a density of the second metal foam region is higher than a density of the metal foam region.
9. The battery or fuel cell module (10) of clause 8, in which the second metal foam region (12b) is bonded to the first metal foam region (12a) at a boundary.
10. The battery or fuel cell module (10) of clause 9, in which the second metal foam region (12b) has a graded density.
11. The battery or fuel cell module (10) of clause 10, in which the second metal foam region comprises a progressively crushed metal foam that increases in density from the density of the first metal foam region (12a).
12. The battery or fuel cell module (10) of any one of the preceding clauses, in which at least one of the bus bars (12) comprises a solid metal core (12d) surrounded by metal foam.
13. The battery or fuel cell module (12) of clause 12, in which the metal foam is bonded to the solid metal core (12d).
14. The battery or fuel cell module (10) of any one of the preceding clauses, in which the metal foam bus bars (12) are elongate bus bars.
15. The battery or fuel cell module (10) of clause 14, in which the plurality of battery cells (11) or fuel cells are arranged in array comprising a plurality of rows of cells, each row comprising plural cells, wherein each metal foam bus bar (12) extends in a plane of the array, is elongate in a direction parallel to a respective row of cells, and electrically connects cells of the respective row.
16. A battery pack (210; 310) comprising one or more battery modules (10) according to any one of the preceding clauses.
17. An aircraft propulsion system (100; 200; 300) comprising a battery or fuel cell module (10) according to any one of clauses 1 to 15 or a battery pack (210; 310) according to clause 16.
18. An aircraft comprising: a battery or fuel cell module (10) according to any one of clauses 1 to 15; a battery pack (210; 310) according to clause 16; or the propulsion system (100; 200; 300) of clause 17.

Various examples have been described, each of which feature various combinations of features. It will be appreciated by those skilled in the art that, except where clearly mutually exclusive, any of the features may be employed separately or in combination with any other features and the invention extends to and includes all combinations and subcombinations of one or more features described herein.

## Claims

1. A battery or fuel cell module (10) comprising:
a plurality of battery cells (11) or fuel cells;
metal foam bus bars (12) that electrically connect together at least some of the battery cells or fuel cells and that are encased in a fluid-impermeable skin (15) so that the bus bars form fluid-tight pipes with a metal foam interior; and
a cooling system arranged to provide a flow of cooling fluid through the metal foam interior of the fluid-tight pipes to remove heat from the bus bars.

2. The battery or fuel cell module (10) of claim 1, in which the cooling system comprises one or more heat exchangers (19) in fluid communication with the fluid-tight pipes, whereby the metal foam interior of the pipes can draw liquid cooling fluid from the one or more heat exchangers by capillary action; and the one or more heat exchangers can receive vaporized cooling fluid from the pipes and condense the vaporized cooling fluid into a liquid for returning to the pipes.

3. The battery or fuel cell module (10) of any one of the preceding claims, in which the metal foam creates a turbulent flow of cooling fluid as the cooling fluid flows through the metal foam.

4. The battery or fuel cell module (10) of any one of the preceding claims, in which the cooling fluid is a dielectric fluid.

5. The battery or fuel cell module (10) of any one of the preceding claims, in which at least one of the bus bars (12) comprises a first metal foam region (12a); and a second metal foam region (12b), wherein a density of the second metal foam region is higher than a density of the metal foam region.

6. The battery or fuel cell module (10) of claim 5, in which the second metal foam region (12b) is bonded to the first metal foam region (12a) at a boundary.

7. The battery or fuel cell module (10) of claim 6, in which the second metal foam region (12b) has a graded density.

8. The battery or fuel cell module (10) of claim 7, in which the second metal foam region comprises a progressively crushed metal foam that increases in density from the density of the first metal foam region (12a).

9. The battery or fuel cell module (10) of any one of the preceding claims, in which at least one of the bus bars (12) comprises a solid metal core (12d) surrounded by metal foam.

10. The battery or fuel cell module (12) of claim 9, in which the metal foam is bonded to the solid metal core (12d).

11. The battery or fuel cell module (10) of any one of the preceding claims, in which the metal foam bus bars (12) are elongate bus bars.

12. The battery or fuel cell module (10) of claim 11, in which the plurality of battery cells (11) or fuel cells are arranged in array comprising a plurality of rows of cells, each row comprising plural cells, wherein each metal foam bus bar (12) extends in a plane of the array, is elongate in a direction parallel to a respective row of cells, and electrically connects cells of the respective row.

13. A battery pack (210; 310) comprising one or more battery modules (10) according to any one of the preceding claims.

14. An aircraft propulsion system (100; 200; 300) comprising a battery or fuel cell module (10) according to any one of claims 1 to 12 or a battery pack (210; 310) according to claim 13.

15. An aircraft comprising: a battery or fuel cell module (10) according to any one of claims 1 to 12; a battery pack (210; 310) according to claim 13; or the propulsion system (100; 200; 300) of claim 14.
